# EUROPÄISCHE PATENTSCHRIFT

(11) **EP 0 753 522 B1**
(45) Veröffentlichungstag und Bekanntmachung des Hinweises auf die Patenterteilung: **29.09.1999**
(21) Anmeldenummer: 95110905.7
(22) Anmeldetag: 12.07.1995
(51) Int. Cl.: C07F 7/28, C07F 17/00

(54) **Verfahren zur Herstellung von Cyclopentadienyltitantrialkoxy-Derivaten**
Process for the preparation of cyclopentadienyl-titanium-trialkoxy derivatives
Procédé de préparation de dérivés de cyclopentadiényl titaniumtrialkoxy

(43) Veröffentlichungstag der Anmeldung: 15.01.1997
(73) Patentinhaber: Witco GmbH, 59192 Bergkamen (DE)
(72) Erfinder: Lisowsky, Richard, Dr., D-59174 Kamen (DE)

(56) Entgegenhaltungen:
- FR-A- 1 227 570
- US-A- 3 306 919
- CHEMICAL ABSTRACTS, vol. 101, no. 25, 17. Dezember 1984, Columbus, Ohio, US; abstract no. 230704r, CURTIS, M.D. ET AL 'SIMPLE SYNTHESIS OF ENOLATE COMPLEXES OF TITANOCENE AND ZIRCONOCENE. MOLECULAR STRUCTURE OF CP2TI(OC2H3)2' Seite 785 ; & ORGANOMETALLICS, Bd.3, Nr.12, 1984 Seiten 1855 - 1859
- CHEMICAL ABSTRACTS, vol. 68, no. 3, 15. Januar 1968, Columbus, Ohio, US; abstract no. 13138e, NESMEYANOV, A.N. ET AL. 'INVERSE DISPROPORTIONATION REACTION AND ESTER INTERCHANGE OF MONOCYCLOPENTADIENYLTITANIUMS' Seite 1266 ; & IZV. AKAD. NAUK SSSR, SER. KHIM., 1967 Seiten 808 - 814
- "Organometallic Chemistry of Titanium,Zirconium,and Hafnium", page 36;Academic Press,Inc.(Londen)Ltd,1974

## Beschreibung

Die Erfindung betrifft ein neues Verfahren zur Herstellung von Cyclopentadienyltitantrialkoxy-Derivaten durch Umsetzung von Cyclopentadienyltitantrichloriden mit Alkoholen in Gegenwart von Alkoholaten.

Cyclopentadienyltitantrialkoxy-Verbindungen der allgemeinen Formel LTi(OR)₃, in welcher L ein Cyclopentadienylrest und R ein Alkyl- oder Arylrest sein kann, werden in der Literatur als Ausgangskomponenten für Katalysatorsysteme zur stereospezifischen Polymerisation von Styrol beschrieben: EP-A-322 663, EP-A-559 108, WO 94/10216.

In der Literatur werden einige Verfahren zur Herstellung von Titanverbindungen der Formel LTi(OR)₃ beschrieben.

Gemäß Chemical Abstract (CA): 55: 6398g; CA: 55: 22273c; CA: 68: 13138e werden Di- oder Trialkoxytitanchloride in einem inerten Lösungsmittel mit metallierten Cyclopentadienylderivaten nach dem folgenden allgemeinen Reaktionsschema umgesetzt: 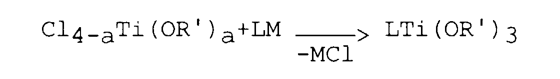 mit L = Cyclopentadienylderivat, M = Li, Na, MgCl, R' = Alkyl- oder Arylrest, a = 2 oder 3.

Dieses Verfahren hat gravierende Nachteile dadurch, daß die Verbindungen Cl₄₋ₐTi(OR')ₐ aufwendig aus TiCl₄ und Ti(OR')₄ hergestellt und gereinigt werden müssen.

Gemäß Wailes, Coutts, Weigold: Organometallic Chemistry of Titanium, Zirkonium and Hafnium, Academic Press New York and London, Seite 34 - 39 werden Cyclopentadienyltitantrichloride in inerten Lösungsmitteln mit Alkoholen in Gegenwart von tertiären Aminen umgesetzt nach der allgemeinen Gleichung 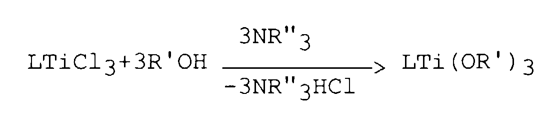 worin R" Alkylreste sind und L und R' die oben genannte Bedeutung haben.

Bei geeigneter Reaktionsführung sind zwar gute Ausbeuten an gewünschtem Reaktionsprodukt erzielbar, jedoch bereitet das als voluminöser Niederschlag anfallende Aminhydrochlorid erhebliche Probleme bei der Reaktionsführung sowie bei der Trennung und Aufarbeitung.

Weiterhin ist trotz erheblicher Überschüsse an R'OH und Base eine vollständige Substitution des Chlors gegen den OR'-Rest kaum zu erreichen, so daß die Reaktionsprodukte unerwünschte Restchlorgehalte enthalten.

Aufgabe der vorliegenden Erfindung war es daher, ein technisch elegantes, kostengünstiges Verfahren bereitzustellen, mit welchem in hohen Ausbeuten, ohne die Bildung von störenden voluminösen Niederschlägen, weitestgehend chloridfreie, das heißt vollständig substituierte Endprodukte herstellbar sind.

Überraschenderweise wurde nun gefunden, daß diese Aufgabe durch Umsetzung von Cyclopentadienyltitantrihalogeniden mit Alkoholen und deren Alkoholaten in inerten Lösungsmitteln gelöst werden kann. Dies ist umso überraschender, als daß bekannt war, daß Titanverbindungen dieses Typs in Gegenwart von Alkoholen zur Abspaltung der Cyclopentadienylgruppe neigen: Wailes, Coutts, Weigold "Organometallic Chemistry of Titanium, Zirconium, and Hafnium", 1974, Seite 36, Academic Press, Inc. (London).

Gegenstand der Erfindung ist daher ein Verfahren zur Herstellung von Cyclopentadienyltitantrialkoxy-Derivaten der allgemeinen Formel

LTi(OR)₃

durch Umsetzung von Cyclopentadienyltitantrihalogeniden mit Alkoholen in inerten Lösungsmitteln, welches dadurch gekennzeichnet ist, daß die Umsetzung in Gegenwart von Alkoholaten nach der allgemeinen Gleichung 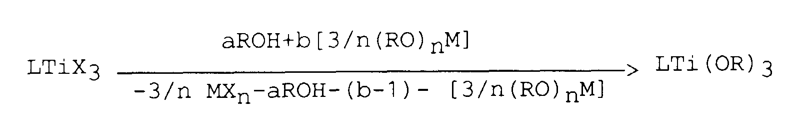 erfolgt mit
- L =: 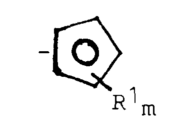 mit m = 1 - 5
- X =: F, Cl, Br, J
- M =: Li, Na, K, Mg, Ca
- R¹, R =: unabhängig voneinander, gegebenenfalls substituierte Alkyl- oder Arylrest und
- n =: die Wertigkeit des Metalls M
- a ≥: 3
- b ≥: 1 ist.

Ein weiterer Gegenstand der Erfindung ist dadurch gekennzeichnet, daß die Verbindung LTiX₃ in einem inerten Lösungsmittel bei Temperaturen von -78 °C bis ca. 120 °C mit einer Alkohol/Alkoholat-Mischung umgesetzt wird, das gebildete Salz und Lösungsmittel entfernt und das Reaktionsprodukt gegebenenfalls durch übliche Verfahren gereinigt wird.

Ein weiterer Gegenstand ist dadurch gekennzeichnet, daß ein Cyclopentadienylrest L mitverwendet wird, in welchem R¹ ein Methyl, Ethyl- oder n-Propylrest und m = 3 - 5 ist.

Ein weiterer Gegenstand ist dadurch gekennzeichnet, daß R ein Methyl-, Ethyl- oder n-Propylrest ist.

Die für das erfindungsgemäße Verfahren mitverwendeten Titanverbindungen der Formel LTiX₃, in welcher L ein gegebenenfalls substituierter Cyclopentadienylrest und X = F, Cl, Br, J bedeuten, können gemäß literaturbekannten Verfahren hergestellt werden: J. Organometal. Chem. 1967, Vol. 8, p 287 ff; Angew. Chem. 1962, 74, Seite 155 ff; J. Organometal. Chem. 1988, 340, p 37 ff; Gmelin Handbuch der Anorganischen Chemie, Titan-Organische Verbindungen, Band 40 Teil 1, Seiten 136 - 156, Springer-Verlag Berlin-Heidelberg-New York 1977.

Erfindungsgemäß bevorzugte Verbindungen sind tri- und höher substituierte, insbesondere Trimethyl-, Tetramethyl- und Pentamethyl-Verbindungen, in denen als Halogenid Chlor bevorzugt ist.

Als erfindungsgemäß mitverwendete Alkohole kommen die handelsüblichen Produkte in Betracht, insbesondere aliphatische, gegebenenfalls verzweigte monofunktionelle Alkohole mit 1 - 10 C-Atomen wie vorzugsweise Methanol, Ethanol, n-Propanol, i-Propanol, gegebenenfalls substituierte aromatische Alkohole mit 6 - 18 C-Atomen wie vorzugsweise Phenol.

Falls erforderlich, werden diese Alkohole mit üblichen Verfahren getrocknet.

Die Alkoholate (RO)ₙM können nach bekannten Verfahren durch Reaktion der genannten Alkoholate, vorzugsweise Methanol, Ethanol, n-Propanol, i-Propanol mit dem entsprechenden Metall - vorzugsweise Li, Na, K, Mg, Ca - hergestellt werden oder sind als handelsübliche technische Produkte erhältlich.

Der Alkohol ROH sowie das Alkoholat RO⁻ werden mindestens in stöchiometrischen Mengen, bezogen auf das zu substituierende Halogenid, in der Verbindung LTiX₃ eingesetzt. Sofern erforderlich, können Überschüsse an Alkohol verwendet werden, um die Dosierbarkeit der Alkohol/Alkoholat-Mischung zu verbessern. Der Überschuß wird auf das zur Dosierung erforderliche Optimum beschränkt.

Die Umsetzung des Cyclopentadienyltrihalogenids mit dem Alkohol/Alkoholat-Gemisch erfolgt erfindungsgemäß bevorzugt so, daß die Verbindung LTiX₃ in einem inerten Lösungsmittel vorgelegt wird, wie vorzugsweise in aromatischen Kohlenwasserstoffen, insbesondere Toluol, Xylol; aliphatischen Kohlenwasserstoffen wie insbesondere Pentan, Hexan, Heptan; Ethern wie insbesondere Tetrahydrofuran, tert.-Butylmethylether, Diethylether; inerten halogenierten Kohlenwasserstoffen wie insbesondere Methylenchlorid. Die Menge an inertem Lösungsmittel ist unkritisch. Sie wird aus reaktionstechnischen Gründen möglichst gering gehalten. Auswahlkriterien sind insbesondere Rührfähigkeit der Reaktionsmischung und gute Abtrennbarkeit des gebildeten Salzes.

Zu dieser Mischung wird unter inerten Bedingungen (Schutzgas) die Alkohol/Alkoholat-Mischung dosiert.

Die Reaktionstemperatur wird während der Dosierung vorzugsweise zwischen ca. -78 °C bis ca. 25 °C gehalten und danach gegebenenfalls stufenlos bis auf Rückflußtemperatur der Mischung erhöht. Die Reaktionszeit nach der Dosierung liegt je nach gewählter Temperatur zwischen 0,5 - 2 h; in der Regel sind 2 h unter Rückflußtemperatur der Mischung ausreichend.

Nach beendeter Reaktion wird das ausgefallene Salz MXn abgetrennt, das Lösungsmittel entfernt und das Reaktionsprodukt gegebenenfalls durch übliche Verfahren wie fraktionierte Destillation oder Umkristallisation gereinigt.

### Beispiele

### Beispiel 1

Es wurden 80 g 1,2,3,4,5-Pentamethylcyclopentadienyltitantrichlorid (0,267 mol) in 300 ml Toluol unter N₂-Atmosphäre vorgelegt, auf -10 °C abgekühlt und tropfenweise mit einer Lösung von 43,3 g Natriummethanolat in Methanol, frisch hergestellt nach üblichen Methoden aus 18,4 g Na (0,8 mol) und 200 ml Methanol, versetzt. Nach beendeter Zugabe wurde die Reaktion 2 h bei Raumtemperatur und 2 h unter Rückfluß weitergeführt. Nach Abkühlung auf Raumtemperatur wurde das ausgefallene NaCl abfiltriert, das Toluol und Methanol unter vermindertem Druck abdestilliert und das verbleibende Rohprodukt fraktioniert destilliert.

Die bei 108 - 110 °C und 6 mbar anfallende Fraktion von 1,2,3,4,5-Pentamethylcyclopentadienyltrimethoxytitan ergab eine Ausbeute von 58 g = 79 % der Theorie mit folgenden analytischen Werten:
¹H-NMR : (CDCl₃)
4,04 ppm (s, 9 H, MeO); 2,02 ppm (s, 15 H, Me₅Cp)
Ti: (ber.; 17,3 %) gef.: 17,2 %
Cl: <0,001 %

### Beispiel 2

Das Verfahren gemäß Beispiel 1 wurde wiederholt mit der Abänderung, daß anstelle des frisch hergestellten Methanolats 144 g (0,8 mol) eines kommerziellen technischen Produkts der Firma BASF, erhältlich als "Natriummethanolat, 30 %ig in Methanol", eingesetzt wurden.

Es wurden 60,5 g = 82 % der Theorie, an reinem 1,2,3,4,5-Pentamethylcyclopentadienyltrimethoxytitan mit folgenden analytischen Werten erhalten:
¹H-NMR: identisch mit dem in Beispiel 1
Ti: (ber.: 17,3 %) gef.: 17,3 %
Cl: < 0,001 %

### Beispiel 3

In Anlehnung an Beispiel 2 wurden 55,1 g (0,2 mol) 1,2,3,4-Tetramethylcyclopentadienyltitantrichlord in 250 ml Toluol vorgelegt und bei -10 °C tropfenweise mit 108 g (0,6 mol) 30 %igem handelsüblichem (BASF)Methanolat versetzt.

Nach beendeter Zugabe wurde die Reaktion 1 h bei Raumtemperatur und 2 h unter Rückfluß weitergeführt.

Nach Abtrennung des NaCl und Destillation wurden 40,9 g (0,156 mol; 79 % d. Th.) an Tetramethylcyclopentadienyltrimethoxytitan mit folgenden analytischen Daten erhalten:
¹H-NMR: (CDCl₃)
5,78 ppm (s, 1 H, H-Cp); 4,07 ppm (s, 9 H, Me-O); 2,08 ppm (s,6 H, Me₂Cp); 2,00 ppm (s, 6 H, Me₂Cp).

### Vergleichsbeispiel

10 g 1,2,3,4,5-Pentamethylcyclopentadienyltitantrichlorid (34,5 mmol) wurden in 200 ml Toluol vorgelegt und mit einer Mischung aus 4 g Methanol (125 mmol) und 12,7 g Triethylamin (125 mmol) tropfenweise bei Raumtemperatur versetzt.

Nach der Zugabe von 2/3 der Mischung mußten weitere 100 ml Toluol zur Reaktionsmischung zugegeben werden, da aufgrund der voluminösen Ausfällung von Triethylaminhydrochlorid keine Rührung mehr möglich war. Nach beendeter Zugabe wurde nach 4 h nachgerührt. Dann wurde das Triethylaminhydrochlorid abfiltriert.

Der Filterkuchen mußte dreimal mit je 80 ml Toluol gewaschen werden, um das Produkt größtenteils auszuwaschen.

Die vereinigten Filtrate wurden dann vom Toluol befreit und der Rückstand destilliert.

Es konnten 6,4 g Produkt (67 % der Theorie) isoliert werden mit folgenden analytischen Werten:
¹H-NMR (CDCl₃)
4,04 (s, 9 H, MeO); 2,02 (s, 15 H, Me₅Cp)
Ti: (ber.: 17,3 %) gef.: 17,1 %
Cl: 0,4 %

## Patentansprüche

1. Verfahren zur Herstellung von Cyclopentadienyltitantrialkoxy-Derivaten der allgemeinen Formel
LTi(OR)₃
durch Umsetzung von Cyclopentadienyltitantrihalogeniden mit Alkoholen in inerten Lösungsmitteln, dadurch gekennzeichnet, daß die Umsetzung in Gegenwart von mindestens stöchiometrischen Mengen von Alkoholaten nach der allgemeinen Gleichung 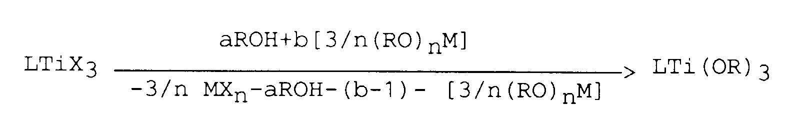 erfolgt mit
L = 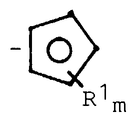 mit m = 1 - 5
X = F, Cl, Br, J
M = Li, Na, K, Mg, Ca
R¹, R = unabhängig voneinander, gegebenenfalls substituierte Alkyl- oder Arylrest und
n = die Wertigkeit des Metalls M
a ≥ 3
b ≥ 1 ist.

2. Verfahren gemäß Anspruch 1, dadurch gekennzeichnet, daß die Verbindung LTiX₃ in einem inerten Lösungsmittel bei Temperaturen von -78 °C bis ca. 120 °C mit einer Alkohol/Alkoholat-Mischung umgesetzt wird, das gebildete Salz und Lösungsmittel entfernt und das Reaktionsprodukt gegebenenfalls durch übliche Verfahren gereinigt wird.

3. Verfahren gemäß Anspruch 1, dadurch gekennzeichnet, daß ein Cyclopentadienylrest L mitverwendet wird, in welchem R¹ ein Methyl, Ethyl- oder n-Propylrest und m = 3 - 5 ist.

4. Verfahren gemäß Anspruch 1, dadurch gekennzeichnet, daß R ein Methyl-, Ethyl- oder n-Propylrest ist.

## Claims

1. Process for the preparation of cyclopentadienyltitanium trialkoxy derivatives of the general formula
LTi(OR)₃
by reaction of cyclopentadienyltitanium trihalides with alcohols in inert solvents, characterized in that the reaction is carried out in the presence of at least stoichiometric amounts of alkoxides in accordance with the general equation 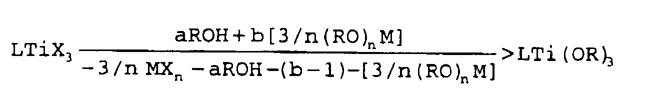 where
L = 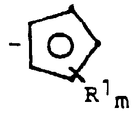 where m = 1 - 5
X = F, Cl, Br, I
M = Li, Na, K, Mg, Ca
R¹, R = independently of each other, unsubstituted or substituted alkyl or aryl radical and
n = the valency of the metal M,
a ≥ 3,
b ≥ 1.

2. Process according to Claim 1, characterized in that the compund LTiX₃ is reacted in an inert solvent with an alcohol/alkoxide mixture at temperatures of -78°C to approximately 120°C, the salt formed and solvent are removed and the reaction product, if appropriate, is purified by conventional processes.

3. Process according to Claim 1, characterized in that a cyclopentadienyl radical L is used conjointly, in which R¹ is a methyl, ethyl or n-propyl radical and m = 3 - 5.

4. Process according to Claim 1, characterized in that R is a methyl, ethyl or n-propyl radical.

## Revendications

1. Procédé de préparation de dérivés de cyclopentadiényltitanetrialcoxy de formule générale
LTi(OR)₃
par transformation de trihalogénures de cyclopentadiényltitane avec des alcools dans des solvants inertes, caractérisé en ce que la transformation s'effectue en présence au moins de quantités stoechiométriques d'alcoolates suivant l'équation générale 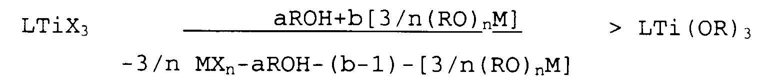 avec
L = 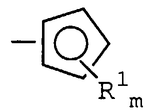 avec m = 1 - 5
X = F, Cl, Br, J
M = Li, Na, K, Mg, Ca
R¹, R = indépendamment l'un de l'autre un radical alkyle ou aryle éventuellement substitué et
n = la valence du métal M
a ≥ 3
b ≥ 1.

2. Procédé suivant la revendication 1, caractérisé en ce que le composé LTiX₃ est transformé dans un solvant inerte à des températures de - 78°C à environ 120°C avec un mélange alcool/alcoolate, en ce que le sel formé et le solvant sont éliminés et en ce que le produit réactionnel est purifié éventuellement au moyen de procédés habituels.

3. Procédé suivant la revendication 1, caractérisé en ce qu'un radical cyclopentadiényle L est utilisé conjointement, dans lequel R¹ est un radical méthyle, éthyle ou n-propyle et m = 3-5.

4. Procédé suivant la revendication 1, caractérisé en ce que R est un radical méthyle, éthyle ou n-propyle.
